# EUROPÄISCHE PATENTSCHRIFT

(11) **EP 4 295 134 B1**
(45) Veröffentlichungstag und Bekanntmachung des Hinweises auf die Patenterteilung: **27.03.2024**
(21) Anmeldenummer: 22703653.0
(22) Anmeldetag: 04.02.2022
(51) Int. Cl.: G01M 13/025, G01M 13/022, G01M 13/026

(54) **PRÜFUNG VON PLANETENGETRIEBEN OHNE PLANETENTRÄGERLAGERUNG**
TESTING OF PLANETARY GEARS WITHOUT PLANET CARRIER BEARINGS
ESSAI DES ENGRENAGES PLANÉTAIRES SANS PALIERS DE CARRIÈRE PLANÉTAIRE

(30) Priorität: 16.02.2021 EP 21157316
(43) Veröffentlichungstag der Anmeldung: 27.12.2023
(73) Patentinhaber: Flender GmbH, 46395 Bocholt (DE)
(72) Erfinder: HAMBRECHT, Ralf, 46399 Bocholt (DE)
(74) Vertreter: Michalski Hüttermann & Partner Patentanwälte mbB
(86) Internationale Anmeldenummer: PCT/EP2022/052671
(87) Internationale Veröffentlichungsnummer: WO 2022/175109

(56) Entgegenhaltungen:
- CN-A- 110 220 699
- DE-A1-102010 053 808

## Beschreibung

Die Erfindung betrifft einen Prüfstand zum Prüfen eines Planetengetriebes. Ferner betrifft die Erfindung einen Prüfaufbau mit einem derartigen Prüfstand und einem zu prüfenden Planetengetriebe. Die Erfindung betrifft weiter ein Verfahren zum Prüfen eines Planetengetriebes mittels eines derartigen Prüfstandes oder zum Betreiben eines derartigen Prüfaufbaus. Zudem betrifft die Erfindung eine Verwendung eines Prüfstands.

Moderne Planetengetriebe, insbesondere bei der Anwendung in Windkraftanlagen, werden zum Teil als Module in integrierten Systemen entwickelt. Bei derartigen Systemen besitzt das Getriebe in der langsam laufenden Stufe teilweise keine Planetenträgerlagerung mehr. Diese Planetengetriebe werden auch als planetenträgerlagerungsfrei bezeichnet. Dies hat zur Konsequenz, dass sie als eigenständiges Modul nicht auf den bisher bekannten Prüfständen getestet werden können und damit nur im System auf Spezialprüfständen mit hohen Investitionskosten geprüft werden können. Gleiches gilt für zukünftige Servicefälle von Planetengetrieben ohne Planetenträgerlager. Diese sind zukünftig nicht ohne das System auf Prüfständen wie beispielsweise den Standard Windgetriebe-Prüfständen zu testen.

Bisher wurde aufwändig im System getestet oder die Planetengetriebe hatten eigene Planetenträgerlagerungen.

Unter einer Getriebeprüfung sind insbesondere Tests zu verstehen, bei denen mindestens eine Drehbewegung, ein Drehmoment, ein Biegemoment oder eine Kombination daraus auf das Getriebe, insbesondere das Planetengetriebe, aufgebracht werden. Diese Belastungen werden auch als Testlasten bezeichnet. Aus CN 110 220 699 A ist ein Prüfstand zum Prüfen eines Planetengetriebes bekannt, bei dem ein Hohlrad und ein Planetenträger des Planetengetriebes bewegungslos fixiert werden und eine zum Einleiten eines Testdrehmoments vorgesehene und mit einer Sonnenwelle gekoppelte Welle mit Spiel durch den Planetenträger hindurchgeführt ist, so dass über mit Planetenträger befestigten Dehnungsmessstreifen eine am bewegungsfest fixierten Planetenträger angreifende Last gemessen werden kann.

Aus DE 10 2010 053 808 A1 ist es bekannt in einem Prüfstand zwei Windgetriebe in einer Back-to-Back-Anordnung mit Hilfe von Torsionsstäben von genau einer Antriebseinheit mit einem Torsionsmoment zu beaufschlagen.

Der Erfindung liegt die Aufgabe zugrunde, eine Prüfmöglichkeit für ein planetenträgerlagerungsfreies Planetengetriebe anzugeben.

Die Lösung der Aufgabe erfolgt durch einen Prüfstand mit den Merkmalen des Anspruchs 1, ein Verfahren mit den Merkmalen des Anspruchs 8, sowie eine Verwendung mit den Merkmalen des Anspruch 11. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Der Prüfstand weist eine zentrale Lagereinheit auf, wobei die zentrale Lagereinheit ausgebildet ist, einen Planetenträger einer ersten Stufe des Planetengetriebes drehbar zu lagern, wobei die zentrale Lagereinheit ferner dazu ausgebildet ist, ein Hohlrad des Planetengetriebes gegenüber dem Planetenträger zu zentrieren. Ferner wird die Aufgabe durch einen Prüfaufbau mit einem derartigen Prüfstand und einem zu prüfenden Planetengetriebe gelöst, wobei die zentrale Lagereinheit den Planetenträger der ersten Stufe des zu prüfenden Planetengetriebes drehbar lagert, wobei die zentrale Lagereinheit die das Hohlrad des zu prüfenden Planetengetriebes gegenüber dem Planetenträger zentriert. Die Aufgabe wird weiter durch ein

Verfahren zum Prüfen eines Planetengetriebes mittels eines derartigen Prüfstandes oder zum Betreiben eines derartigen Prüfaufbaus gelöst, wobei eine Testlast mit Hilfe eines Flansches von dem Hohlrad auf das Gehäuse der zentralen Lagereinheit übertragen wird.

Die mindestens eine Stufe des Planetengetriebes ist insbesondere durch ein Planetengetriebe gebildet, so dass die Stufe als Planetenradstufe ausgebildet sein kann.

Der Erfindung liegt unter anderem die Erkenntnis zugrunde, dass durch die Verwendung der vorgeschlagenen zentralen Lagereinheit auch das Testen und Prüfen eines planetenträgerlagerungsfreien Planetengetriebes möglich ist. Dabei kann das das Planetengetriebe, das für die Prüfung vorgesehen ist, als planetenträgerlagerungsfreies Planetengetriebe ausgeführt sein. Durch die Möglichkeit der Lagerung der ersten Stufe eignet sich der Prüfstand bzw. der Prüfaufbau im Besonderen für die Messungen und Tests an einem planetenträgerlagerungsfreien Planetengetriebe. Die zentrale Lagereinheit ist eine getriebeexterne Vorrichtung des Prüfstandes. Diese zentrale Lagereinheit lagert den Planetenträger der ersten Stufe des zu prüfenden Planetengetriebes. Darüber hinaus zentriert die zentrale Lagereinheit das entsprechende Hohlrad bzw. die jeweiligen Hohlräder beim Prüfen mehrerer Planetengetriebe gegenüber dem Planetenträger bzw. den jeweiligen Planetenträgern. Der Flansch dient zur Anbindung des Hohlrades, um vom Hohlrad auf den feststehenden Teil der zentralen Lagereinheit, wie beispielsweise dem Gehäuse der zentralen Lagereinheit, eine Testlast zu übertragen. Der Flansch ist also zwischen der zentralen Lagereinheit und dem Planetengetriebe angeordnet. Der Flansch kann dabei dem Getriebe oder der zentralen Lagereinheit zugeordnet werden. Darüber hinaus kann alternativ der Flansch auch als separate Komponente ausgeführt sein, die weder dem Getriebe noch der zentralen Lagereinheit zugeordnet ist. Die Testlasten werden ebenfalls über den Flansch abgestützt. Eine Testlast kann beispielsweise durch ein Drehmoment, eine Gewichtslast und/oder einem Biegemoment gebildet werden. Die Drehmomentrückführung aus dem Hohlrad in die Umgebungskonstruktion erfolgt dabei in vorteilhafter Weise über das Gehäuse der zentralen Lagereinheit und wird von dort weiter in einen geschlossenen Rahmen zu elektrischen Maschinen des Prüfstands oder in das Fundament, insbesondere in das Fundament der zentralen Lagereinheit, eingeleitet.

Die zentrale Lagereinheit weist insbesondere mindestens ein Wälzlagerauf. Vorzugsweise weist die zentrale Lagereinheit mindestens zwei in axialer Richtung zueinander beabstandete Wälzlager auf. Die zentrale Lagereinheit kann dadurch hohe Radialkräfte und/oder Axialkräfte abstützen.

Auf das Testen mit aufwändigen Komplettsystemprüfungen kann verzichtet werden. Dazu können mit dem vorgeschlagenen Prüfstand bzw. Prüfaufbau bereits bestehende Prüfstände auf einfache Weise mit einer zentralen Lagereinheit ausgerüstet werden und für die Prüfung der modernen planetenträgerlagerlosen Getriebe eingesetzt werden. Der Platzbedarf zwischen den Verspannsystemen ist um die Hälfte geringer und die zu handhabenden Gewichte sind ebenfalls um mehr als die Hälfte reduziert. Die zentrale Lagereinheit ist somit Teil des Prüfstands und braucht nicht mit dem zu prüfenden Planetengetriebe gewechselt werden.

Die Anordnung des Prüfstands, des Prüfaufbaus und das Verfahren eignen sich in besonderer Weise für das Planetengetriebe einer Windkraftanlage. Diese Getriebe werden in relativ gro-ßer Stückzahl produziert und die Anforderungen an die Zuverlässigkeit sind wegen der Anordnung des Planetengetriebes im Turm einer Windkraftanlage besonders hoch. Darüber hinaus gibt es auch zahlreiche Anforderungen bezüglich einer Zertifizierung, die Tests unter definierten Randbedingungen erfordern. Diese Randbedingungen können auf dem Prüfstand bzw. an dem Prüfaufbau eingestellt werden, so dass sich dieser Prüfstand bzw. dieser Prüfaufbau im besonderen Maße für Messungen und Tests an einem Planetengetriebe für Windkraftanwendungen eignet und vorteilhaft ist.

Bei einer vorteilhaften Ausgestaltung der Erfindung ist der Prüfstand als eine back-to-back Anordnung ausgeführt. Mit dieser Anordnung ist es möglich, gleichzeitig zwei Planetengetriebe zu prüfen. Der Prüfstand ist bei dem back-to-back Aufbau symmetrisch und/oder spiegelbildlich bezüglich der zentralen Lagereinheit ausgeführt. Auch die zentrale Lagereinheit ist in diesem Fall symmetrisch ausgeführt. An beiden Seiten der zentralen Lagereinheit wird jeweils das Hohlrad gegenüber dem Planetenträger gelagert, wobei der Prüfstand an beiden Seiten jeweils einen Flansch am Gehäuse der zentralen Lagereinheit aufweist, um den Planetenträger anzubinden. Alternativ kann der Flansch auch am Planetengetriebe, insbesondere am Planetenträger angeordnet sein und diesen mit der zentralen Lagereinheit verbinden. Somit werden für die back-to-back Anordnung auch zwei elektrische Maschinen vorgesehen, zwischen denen die beiden Planetengetriebe und die zentrale Lagereinheit vorteilhafterweise symmetrisch angeordnet sind. Dabei ist festzuhalten, dass die elektrischen Maschinen nicht zwangsläufig mit dem Fundament verbunden sein müssen. Sondern auch in der Form des HybridDrives (Getriebe-Generator Kombination) angekoppelt und getestet werden können. Dabei ergibt sich kein Rückfluss des Antriebsmomentes über das Fundament, sondern über die Gehäuse.

Auch bei dieser Anordnung erfolgt die Drehmomentrückführung aus dem Hohlrad in die Umgebungskonstruktion in vorteilhafter Weise über das Gehäuse der zentralen Lagereinheit und wird von dort weiter in einen geschlossenen Rahmen zu elektrischen Maschinen des Prüfstands oder in das Fundament, insbesondere in das Fundament der zentralen Lagereinheit, eingeleitet. In der vorliegenden back-to-back kann das Hauptabstützmoment über das Gehäuse der zentralen Lagereinheit mit dem Gegenhaltemoment des zweiten Prüflings eliminiert werden. Damit werden dann nur die Antriebs- und Bremsmomente der elektrischen Maschine, neben den Gewichtslasten, über das Fundament abgestützt.

Ein Aspekt der Erfindung betrifft die Verwendung des Prüfstands, der wie vorstehend beschrieben aus- und weitergebildet sein kann, für die Durchführung von Messungen und/oder Tests an einem planetenträgerlagerungsfreien Planetengetriebe.

Im Folgenden wird die Erfindung anhand der in den Figuren dargestellten Ausführungsbeispiele näher beschrieben und erläutert. Es zeigen:
- FIG 1: einen Prüfstand und
- FIG 2: einen Prüfaufbau.

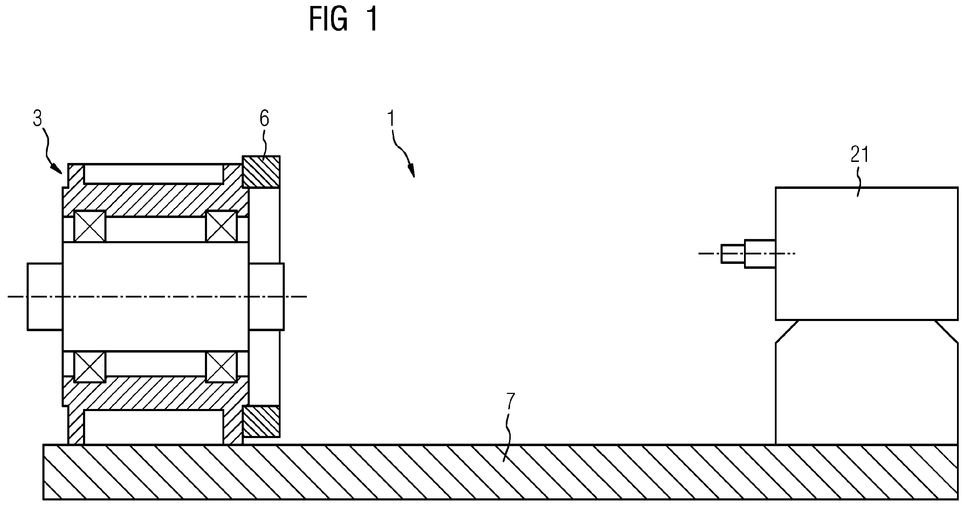

Die FIG 1 zeigt einen Prüfstand 1 zur Prüfung eines hier nicht dargestellten, planetenträgerlagerungsfreien Planetengetriebes 2. Eine zentrale Lagereinheit 3 ist dazu vorgesehen, mit dem Planetengetriebe 2 verbunden zu werden und es zu halten und zentrieren. Da das Halten die Rotation ermöglicht, wird es auch als drehbar halten, oder kurz lagern bezeichnet. Zur weiteren Verbindung der zentralen Lagereinheit 3 mit dem Planetengetriebe 2 dient unter anderem ein Flansch 6 an der zentralen Lagereinheit 3 oder am Planetengetriebe 2. Der Flansch 6 verbindet das hier nicht dargestellte Hohlrad 5 des Planetengetriebes 2 mit der zentralen Lagereinheit 3. Die Drehmomentrückführung aus dem Hohlrad 5 des Planetengetriebes kann dadurch über das Gehäuse der zentralen Lagereinheit 3 in das Fundament 7 erfolgen. Der Prüfstand 1 weist zudem eine elektrische Maschine 21 auf, mit der das Planetengetriebe 2 mit einem Drehmoment belastet werden kann.

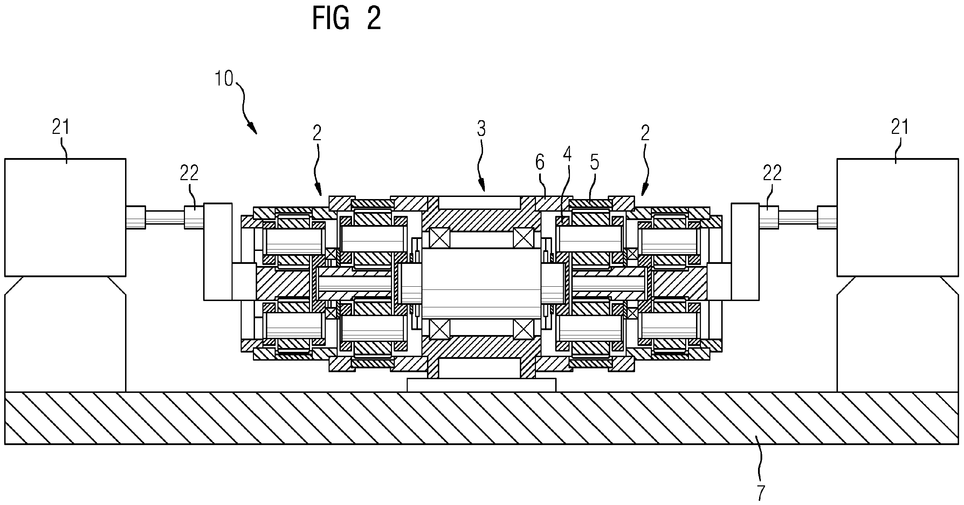

Die FIG 2 zeigt einen Prüfaufbau 10 an einem Prüfstand 1. Zur Vermeidung von Wiederholungen wird auf die Beschreibung zur FIG 1 sowie auf die dort eingeführten Bezugszeichen verwiesen. Das Planetengetriebe 2 ist über ein Prüfstandsgetriebe 22 mit der elektrischen Maschine 21 verbunden. Das Prüfstandsgetriebe 22 ist jedoch nur optional vorhanden und muss nicht unbedingt Teil des Prüfaufbaus 10 sein. Falls die elektrische Maschine 21 in ihrer Ausgestaltung den erforderlichen Drehmoment- und Drehzahlbereich abdeckt, kann auf ein Prüfstandsgetriebe 22 verzichtet werden. Dies ist insbesondere bei mittelschnellen elektrischen Maschinen der Fall. Dann ist auch eine konzentrische Anbindung der elektrischen Maschine 21 möglich. Die andere Seite des Planetengetriebes 2 ist mit der zentralen Lagereinheit 3 verbunden, so dass der Planetenträger 4 drehbar gelagert wird. Das Hohlrad 5 des Planetengetriebes 2 wird mittels einem Flansch 6 mit der zentralen Lagereinheit 3 verbunden und kann darüber auch die Drehmomentrückführung bis in das Fundament 7 sicherstellen.

Der dargestellte Aufbau entspricht einer back-to-back Anordnung, bei der zwei Planetengetriebe 2 geprüft werden können. Der Prüfstand 10 ist dabei symmetrisch aufgebaut, so dass auch eine zweite elektrische Maschine 21 und ein zweites Prüfstandsgetriebe 22 vorhanden sind. In der Mitte befindet sich die zentrale Lagereinheit 3, die die Planetenträger 4 der beiden Planetengetriebe 2 lagert. Somit sind beide Planetengetriebe 2 über die zentrale Lagereinheit 3 miteinander verbunden.

Zusammenfassend betrifft die Erfindung einen Prüfstand zum Prüfen eines Planetengetriebes. Zur Nutzung des Prüfstands für ein planetenträgerlagerungsfreies Planetengetriebe wird vorgeschlagen, dass der Prüfstand eine zentrale Lagereinheit aufweist, wobei die zentrale Lagereinheit ausgebildet ist, einen Planetenträger einer ersten Stufe des Planetengetriebes drehbar zu lagern, wobei die zentrale Lagereinheit ferner dazu ausgebildet ist, ein Hohlrad des Planetengetriebes gegenüber dem Planetenträger zu zentrieren. Ferner betrifft die Erfindung einen Prüfaufbau mit einem derartigen Prüfstand und einem zu prüfenden Planetengetriebe, wobei die zentrale Lagereinheit den Planetenträger der ersten Stufe des zu prüfenden Planetengetriebes drehbar lagert, wobei die zentrale Lagereinheit das Hohlrad des zu prüfenden Planetengetriebes gegenüber dem Planetenträger zentriert. Weiter betrifft die Erfindung ein Verfahren zum Prüfen eines Planetengetriebes mittels eines derartigen Prüfstandes oder zum Betreiben eines derartigen Prüfaufbaus, wobei eine Testlast mit Hilfe des Flansches von dem Hohlrad auf das Gehäuse der zentralen Lagereinheit übertragen wird.

## Patentansprüche

1. Prüfstand (1) zum Prüfen eines Planetengetriebes (2), wobei der Prüfstand (1) eine zentrale Lagereinheit (3) aufweist,
**dadurch gekennzeichnet, dass**
die zentrale Lagereinheit (3) ausgebildet ist, einen Planetenträger (4) einer ersten Stufe des Planetengetriebes (2) drehbar zu lagern, wobei die zentrale Lagereinheit (3) ferner dazu ausgebildet ist, ein Hohlrad (5) des Planetengetriebes (2) gegenüber dem Planetenträger (4) zu zentrieren.

2. Prüfstand (1) nach Anspruch 1, wobei die zentrale Lagereinheit (3) mindestens zwei in axialer Richtung zueinander beabstandete Wälzlager zum Abstützen von Radialkräften und/oder Axialkräften aufweist.

3. Prüfstand (1) nach Anspruch 1 oder 2, wobei der Prüfstand (1) als eine back-to-back Anordnung zur gleichzeitigen Prüfung von zwei spiegelbildlich bezüglich der zentralen Lagereinheit (3) zueinander angeordneten Planetengetrieben (2) ausgeführt ist.

4. Prüfaufbau (10) mit einem Prüfstand (1) nach einem der Ansprüche 1 bis 3 und einem zu prüfenden Planetengetriebe (2), wobei die zentrale Lagereinheit (3) den Planetenträger (4) der ersten Stufe des zu prüfenden Planetengetriebes (2) drehbar lagert, wobei die zentrale Lagereinheit (3) das Hohlrad (5) des zu prüfenden Planetengetriebes (2) gegenüber dem Planetenträger (4) zentriert.

5. Prüfaufbau (10) nach Anspruch 4, wobei der Prüfaufbau (10) als eine back-to-back Anordnung ausgeführt ist.

6. Prüfaufbau (10) nach Anspruch 4 oder 5, wobei das zu prüfende Planetengetriebe (2) als planetenträgerlagerungsfreies Planetengetriebe ausgestaltet ist.

7. Prüfaufbau (10) nach einem der Ansprüche 4 bis 6, wobei das zu prüfende Planetengetriebe (2) eine erste Stufe und mindestens eine mit der ersten Stufe drehmomentübertragend gekoppelte weitere Stufe aufweist.

8. Verfahren zum Prüfen eines Planetengetriebes (2) mittels eines Prüfstandes (1) nach einem der Ansprüche 1 bis 3 oder zum Betreiben eines Prüfaufbaus (10) nach einem der Ansprüche 4 bis 7, wobei eine Testlast mit Hilfe eines Flansches (6) von dem Hohlrad (5) auf das Gehäuse der zentralen Lagereinheit (3) übertragen wird.

9. Verfahren nach Anspruch 8, wobei eine Drehmomentrückführung aus dem Hohlrad (5) über das Gehäuse der zentralen Lagereinheit (3) in ein Fundament (7) der zentralen Lagereinheit (3) erfolgt.

10. Verfahren nach Anspruch 8 oder 9, wobei der Flansch (6) zwischen der zentralen Lagereinheit (3) und dem Planetengetriebe (29 angeordnet ist.

11. Verwendung des Prüfstands (1) nach einem der Ansprüche 1 bis 3 für die Durchführung von Messungen und/oder Tests an einem planetenträgerlagerungsfreien Planetengetriebe.

## Claims

1. Test bench (1) for testing a planetary transmission (2), the test bench (1) having a central bearing unit (3),
**characterized in that**
the central bearing unit (3) is configured to rotatably mount a planetary carrier (4) of a first stage of the planetary transmission (2), the central bearing unit (3) being configured, furthermore, to center a ring gear (5) of the planetary transmission (2) with respect to the planetary carrier (4).

2. Test bench (1) according to Claim 1, the central bearing unit (3) having at least two anti-friction bearings which are spaced apart from one another in the axial direction for supporting radial forces and/or axial forces.

3. Test bench (1) according to Claim 1 or 2, the test bench (1) being configured as a back-to-back arrangement for simultaneously testing two planetary transmissions (2) which are arranged in a mirror-inverted manner with regard to the central bearing unit (3) with respect to one another.

4. Test setup (10) with a test bench (1) according to one of Claims 1 to 3 and with a planetary transmission (2) to be tested, the central bearing unit (3) rotatably mounting the planetary carrier (4) of the first stage of the planetary transmission (2) to be tested, the central bearing unit (3) centering the ring gear (5) of the planetary transmission (2) to be tested with respect to the planetary carrier (4).

5. Test setup (10) according to Claim 4, the test setup (10) being configured as a back-to-back arrangement.

6. Test setup (10) according to Claim 4 or 5, the planetary transmission (2) to be tested being configured as a planetary transmission which is free from planetary carrier bearings.

7. Test setup (10) according to one of Claims 4 to 6, the planetary transmission (2) to be tested having a first stage and at least one further stage which is coupled in a torque-transmitting manner to the first stage.

8. Method for testing a planetary transmission (2) by means of a test bench (1) according to one of Claims 1 to 3 or for operating a test setup (10) according to one of Claims 4 to 7, a test load being transmitted with the aid of a flange (6) from the ring gear (5) to the housing of the central bearing unit (3).

9. Method according to Claim 8, a return of torque taking place from the ring gear (5) via the housing of the central bearing unit (3) into a foundation (7) of the central bearing unit (3).

10. Method according to Claim 8 or 9, the flange (6) being arranged between the central bearing unit (3) and the planetary transmission (29).

11. Use of the test bench (1) according to one of Claims 1 to 3 to carry out measurements and/or tests on a planetary transmission which is free from planetary carrier bearings.

## Revendications

1. Banc d'essai (1) servant à tester une transmission planétaire (2), le banc d'essai (1) présentant une unité formant palier centrale (3),
**caractérisé en ce que**
l'unité formant palier centrale (3) est réalisée pour supporter à rotation un porte-satellites (4) d'un premier étage de la transmission planétaire (2), l'unité formant palier centrale (3) étant en outre réalisée pour centrer une couronne (5) de la transmission planétaire (2) par rapport au porte-satellites (4).

2. Banc d'essai (1) selon la revendication 1, l'unité formant palier centrale (3) présentant au moins deux paliers à roulement espacés les uns des autres dans la direction axiale pour supporter des forces radiales et/ou des forces axiales.

3. Banc d'essai (1) selon la revendication 1 ou 2, le banc d'essai (1) étant conçu sous la forme d'un agencement dos à dos pour le test simultané de deux transmissions planétaires (2) agencées en symétrie miroir l'une par rapport à l'autre par rapport à l'unité formant palier centrale (3).

4. Structure d'essai (10) comportant un banc d'essai (1) selon l'une des revendications 1 à 3 et une transmissions planétaire (2) à tester, l'unité formant palier centrale (3) supportant à rotation le porte-satellites (4) du premier étage de la transmission planétaire (2) à tester, l'unité formant palier centrale (3) centrant la couronne (5) de la transmission planétaire (2) à tester par rapport au porte-satellites (4) .

5. Structure d'essai (10) selon la revendication 4, la structure d'essai (10) étant conçue sous la forme d'un agencement dos à dos.

6. Structure d'essai (10) selon la revendication 4 ou 5, la transmission planétaire (2) à tester étant configurée sous forme de transmission planétaire dépourvue de palier de porte-satellites.

7. Structure d'essai (10) selon l'une des revendications 4 à 6, la transmission planétaire (2) à tester présentant un premier étage et au moins un autre étage accouplé au premier étage de manière à transmettre un couple.

8. Procédé de test d'une transmission planétaire (2) au moyen d'un banc d'essai (1) selon l'une des revendications 1 à 3 ou de fonctionnement d'une structure d'essai (10) selon l'une des revendications 4 à 7, une charge de test étant transmise, à l'aide d'une bride (6), de la couronne (5) au carter de l'unité formant palier centrale (3).

9. Procédé selon la revendication 8, un retour de couple ayant lieu à partir de la couronne (5) par le biais du carter de l'unité formant palier centrale (3) dans une base (7) de l'unité formant palier centrale (3).

10. Procédé selon la revendication 8 ou 9, la bride (6) étant agencée entre l'unité formant palier centrale (3) et la transmission planétaire (29).

11. Utilisation du banc d'essai (1) selon l'une des revendications 1 à 3 pour la mise en œuvre de mesures et/ou de test sur une transmission planétaire dépourvue de palier de porte-satellites.
